# EUROPEAN PATENT SPECIFICATION

(11) **EP 3 158 177 B1**
(45) Date of publication and mention of the grant of the patent: **18.12.2019**
(21) Application number: 15736775.6
(22) Date of filing: 16.06.2015
(51) Int. Cl.: F02B 23/06, F02F 3/24, F01L 5/06, F01L 5/20

(54) **A TWO-STROKE COMBUSTION ENGINE**
ZWEITAKT BRENNKRAFTMASCHINE
MOTEURÀ DEUX TEMPS

(30) Priority: 18.06.2014 CZ 20140417
(43) Date of publication of application: 26.04.2017
(73) Proprietor: Novotny, Zdenek, 250 01 Brandys nad labem (CZ)
(72) Inventor: Novotny, Zdenek, 250 01 Brandys nad labem (CZ)
(74) Representative: Hainz, Miloslav
(86) International application number: PCT/CZ2015/000061
(87) International publication number: WO 2015/192816

(56) References cited:
- WO-A1-2012/116665
- DE-C- 737 284
- NL-C- 56 455
- US-A- 2 004 693

## Description

### Field of invention

The invention relates to a two-stroke combustion engine for use in a car, motorbike, sports and tourist aircraft or as a drive of industrial units.

### Background of the invention

Two-stroke valveless spark-ignition engines use filling of the engine cylinder through the crankcase with throttling of the inlet air by a throttling flap in the suction pipeline or they use a carburettor. In compression ignition valveless two-stroke engines turbocharger supercharging is used. In both the cases return rinsing of the cylinder is used in various versions. A disadvantage of engines of the prior art with return rinsing of the cylinder appears to be imperfect rinse of the cylinder with fresh air or a mixture of fresh air with fuel, low volume efficiency and uneven heat load of the engine cylinder and piston, which results in a lower volume output and higher fuel consumption.

Examples of conventional two stroke engine are disclosed in NL 56455 C, US 2004693 A, DE 737284 C and WO2012/116665 A1.

### Summary of the invention

The above mentioned disadvantages of the prior art are eliminated by a two-stroke combustion engine in accordance with the invention, comprising a cylinder fixed in a cylinder block and a piston mounted in the cylinder the principle of which is that the perimeter of the cylinder is provided with at least one row of exhaust windows that lead to the exhaust channel positioned outside the cylinder perimeter and under the exhaust windows with at least one row of rinse windows that lead to a rinse channel positioned outside the perimeter of the cylinder, wherein in each row of the exhaust windows there are at least two exhaust windows and in each row of the rinse windows there are at least two rinse windows, wherein the exhaust windows are angularly offset with regard to the rinse windows and the piston is equipped with a combustion space and with rinse openings distributed on the perimeter of the piston, which rinse openings interconnect the combustion space with the rinse windows in the bottom dead centre of the piston.

According to one of advantageous embodiments, the cylinder perimeter is provided with at least two rows of exhaust windows positioned over each other, wherein the exhaust windows are arranged in such a way that the exhaust windows of different rows are positioned over each other along lines parallel to the cylinder axis, the cylinder perimeter being further provided with at least two rows of rinse windows positioned over each other, wherein the rinse windows are arranged in such a way that rinse windows of different rows are positioned over each other along lines parallel to the cylinder axis.

All the exhaust windows may conveniently have the same shape and size. Also, all the rinse windows may conveniently have the same shape and size.

According to one of advantageous embodiments all the exhaust windows and rinse windows have an approximately rectangular shape with rounded corners and the same size.

According to one of advantageous embodiments the rinse windows are angularly offset with respect to the exhaust windows by a half of the spacing of the exhaust windows.

According to one of advantageous embodiments the spark-ignition two-stroke combustion engine contains a bushing that is mounted on the cylinder in a rotary way in the space of the exhaust channel and rinse channel, the bushing being provided on its perimeter with at least one row of throttling exhaust openings and under them with at least one row of throttling rinse openings, wherein the bushing can be slewed in a controlled way in the range from its first position where the engine is in the idle state to the second position where the engine works at its maximum output.

In the above mentioned first position the total passing cross section of exhaust gas from the cylinder through the exhaust windows and the throttling exhaust openings is larger than the total passing cross-section of air inlet to the cylinder through the throttling rinse openings and the rinse windows and in the first position both these passing cross-sections are at their minimums, wherein with rotation of the bushing from the first position these passing cross-sections get larger up to their maximums in the above mentioned second position.

The rotation of the bushing is advantageously derived from the gas pedal or the engine speed controller.

According to one of advantageous embodiments the throttling exhaust openings approximately have the shape of a rectangular trapezium with rounded corners and the throttling rinse openings approximately have the shape of a rectangular triangle with rounded corners.

The rinse openings may be e.g. approximately circular.

The rinse openings may be designed as cutouts open to the compression space.

As indicated above, the cylinder is fitted on its perimeter with exhaust windows that lead to the exhaust channel, and with rinse windows positioned under them that are angularly offset with regard to the exhaust window, advantageously by a half of the spacing of the exhaust windows, and lead to the rinse channel. The engine piston is provided with a combustion space that inclined rinse openings distributed on the piston perimeter lead into. In the bottom dead centre position of the piston these rinse openings interconnect the combustion space with the rinse windows.

For spark-ignition versions of the engine it is advantageous to use a bushing that is mounted in a rotary way on the engine cylinder in the space of the exhaust channel and rinse channel and fitted on its perimeter with a row of throttling exhaust openings arranged next to each other and under this row with a row of throttling rinse openings arranged next to each other. Both the rows of openings are advantageously angularly offset with regard to each other by a half of the spacing of the openings. The shape of the throttling exhaust openings is e.g. that of approximate rectangular trapeziums with rounded corners and the shape of the throttling rinse openings is e.g. that of approximate rectangular triangles with rounded edges. Rotation of the bushing causes a reduction or increase of the passing cross-section of air inlet to the cylinder and of the passing cross-section of the exhaust gas out of the engine cylinder and thus a change of timing of the exhaust and rinse of the cylinder. The exhaust and rinse windows are designed as cutouts and approximately have the shape of a rectangle with rounded edges. The above mentioned timing change is enabled by the fact that during the reduction of the passing cross-section of the windows the windows in the top row (closer to the top dead centre) are closed first.

A rinse opening created in the piston may have the design of a cutout that is open to the compression space. It may have a circular shape or the shape of an approximate rectangle with rounded corners.

As indicated above, the design in accordance with the invention causes that in the engine the cylinder is rinsed via the combustion space in the engine piston through the cylinder centre towards the top dead centre and subsequently the exhaust gas is forced to the cylinder walls and to the exhaust. Creation of a sufficient pressure of fresh air before the entry to the engine cylinder with the use of a blower or turbo-charger reduces penetration (blow-off) of the combustion products even when the channels of the engine cylinder are fully open, ensuring better filling of the cylinder with fresh air. Fuel injection by the fuel nozzle in the spark-ignition version of the engine at the moment the engine piston has just passed the bottom dead centre eliminates fuel losses with the possibility to create a layered mixture of ignition consistency at the sparking plug in the cylinder head.

### Brief description of drawings

The invention will be clarified in more detail with the use of examples of embodiments of the invention, schematically illustrated in the attached drawings, where:
- fig. 1 shows a section of an embodiment example of the compression ignition engine according to the invention,
- fig. 2 shows the spark-ignition version of the engine with filling via the crankshaft,
- fig. 3 shows the spark-ignition version of the engine with supercharging using a blower and a bushing enabling changes of timing of the exhaust and cylinder rinse,
- fig. 4 shows an example of distribution and shape of the exhaust and rinse windows on the cylinder in the unrolled shape,
- fig. 5 shows examples of embodiment of the rinse openings in the engine piston,
- fig. 6 shows an example of shape of the throttling exhaust and rinse openings and their positions with regard to the exhaust windows and rinse windows in the idle regime of the engine and in the unrolled shape of the cylinder with the bushing,
- fig. 7 shows an example of shape of the throttling exhaust and rinse openings and their position with regard to the exhaust windows and rinse windows in the full gas mode and in the unrolled shape of the cylinder with the bushing,
- fig. 8 shows distribution diagram for the maximally closed throttling openings of the bushing or closed throttling flap in the idle regime of the engine, and
- fig. 9 shows distribution diagram for the maximally, i.e. fully opened channels or throttling flap in the full gas mode of a spark-ignition engine with blower supercharging or filling via the crankshaft.

### Examples of embodiments of the invention

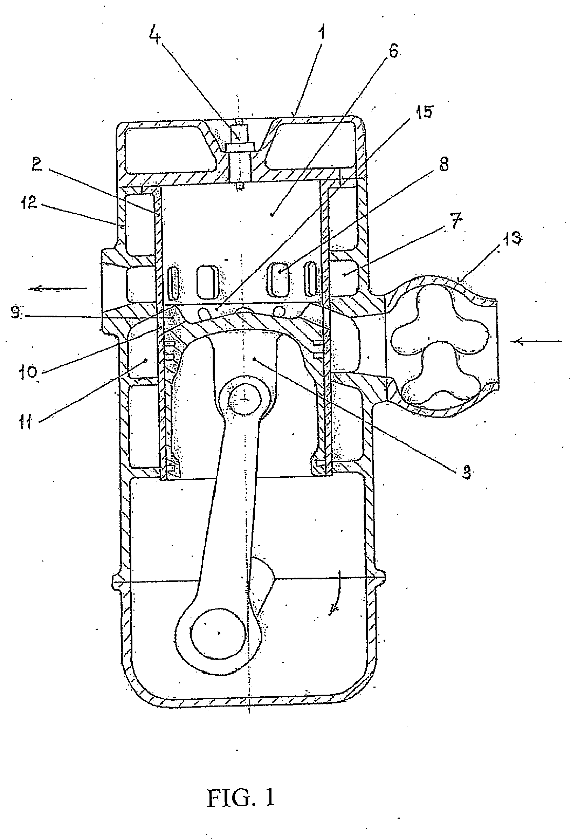

Fig. 1 shows the first example of embodiment of the engine in accordance with the invention. It is a compression ignition engine containing a head 1 where an injection nozzle 4 is fixed. The cylinder block 12 includes a cylinder 2, in the central part of which exhaust windows 8 are provided along perimeter of the cylinder 2 and under them rinse windows 10 are provided. In the cylinder 2 a piston 3 moves in a sliding way the movement of which is derived from the cranking mechanism. The piston 3 is fitted with inclined rinse openings 9 distributed on its perimeter, which rinse openings 9 lead to the combustion space 15 in the top part of the piston 3. In the cylinder block 12, in the space of the exhaust openings 8 a circular exhaust channel 7 is created to remove exhaust gases and under it in the space of the rinse windows 10 an annular rinse channel 11 is created, which is filled with fresh air from the blower 13.

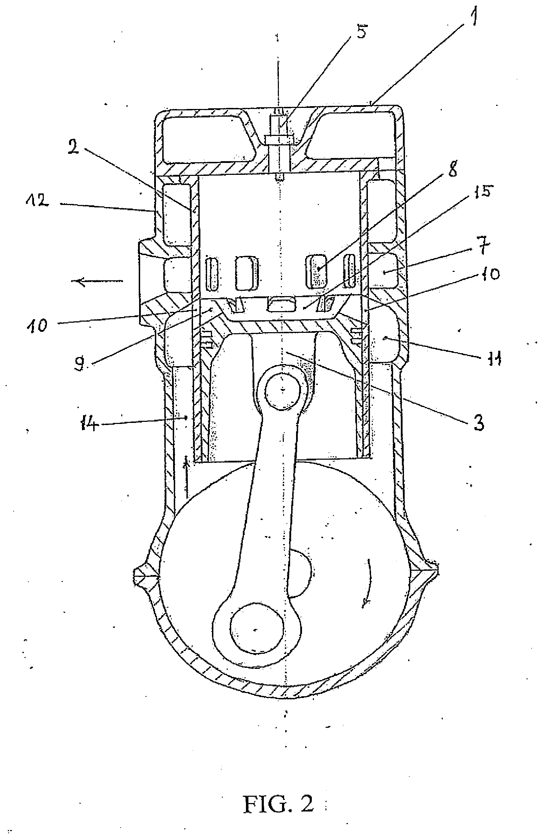

Fig. 2 shows the second example of embodiment of the engine in accordance with the invention. It is a spark-ignition engine containing a head 1 in which a sparking plug 5 is fixed. No injection nozzle is displayed, as in a spark-ignition engine a carburettor can generally be used instead of an injection nozzle. In the cylinder block 12 a cylinder 2 is impressed in the central part of which exhaust windows 8 are created along the perimeter and rinse windows 10 under them. In the cylinder 2 a piston 3 moves in a sliding way the movement of which is derived from the cranking mechanism. The piston 3 is fitted with inclined rinse openings 9 distributed on its perimeter that lead to the combustion space 15 in the top part of the piston 3. In the cylinder block 12, in the space of the exhaust openings 8 a circular exhaust channel 7 is created to remove exhaust gases and under it in the space of the rinse windows 10 an annular rinse channel 11 is created, which is filled with fresh air from the blower crankcase via the connection channel 14. Alternatively, the rinse channel may be filled with air from the blower.

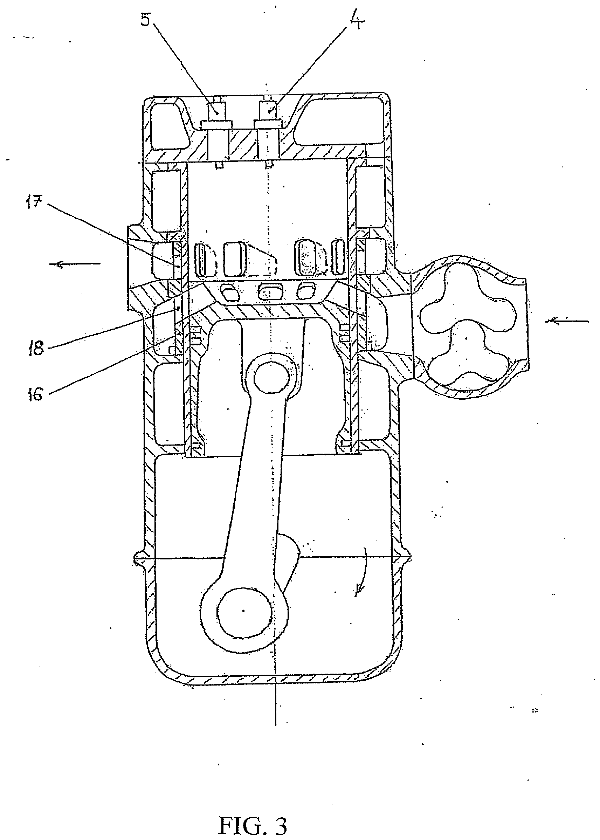

Fig. 3 illustrates the third example of an embodiment, namely a spark-ignition engine, on the cylinder 2 of which and from the outside of the cylinder 2 a bushing 16 is mounted in the space of the exhaust windows 8 and rinse windows 10. On the perimeter of the bushing 16 throttling exhaust openings 17 and under them throttling rinse openings 18 are created. Rotation of the bushing 16 may be conveniently derived from the gas pedal or engine speed controller. The air enters the compression space 6 from the rinse channel 11 via the rinse windows 10 through the rinse openings 9 and the compression space 15 is compressed by the piston 3.

The two-stroke combustion engine works in such a way that fresh air from the crankcase or blower 13 is forced under pressure via a pipe to the rinse channel 11 and from there, as soon as the piston 3 opens the rinse windows 10 during its movement to the bottom dead centre, through the rinse openings 9 and the combustion space 15 to the compression space 6 and expels the exhaust gases through the exhaust windows 8 to the exhaust channel 7. When the piston 3 moves from the bottom dead centre and starts to compress air in the cylinder 2 and closes the rinse windows 10, the injection nozzle 4 of the spark-ignition engine injects finely sprayed fuel into the compressed air on simultaneous closing of the exhaust windows 8. The compressed homogeneous mixture is ignited before the top dead centre by the sparking plug 5. In a compression ignition engine, fuel is injected when the piston 3 is in position just before the top dead centre, wherein in these engines the output change is governed by the quantity law without throttling of the air inlet. In the spark-ignition versions the output change is determined by throttling of air supply to the cylinder with a throttling flap in the carburettor or the suction pipe, or possibly in a version where the engine contains a bushing 16 by throttling of air inlet by slewing (rotation) of the bushing 16.

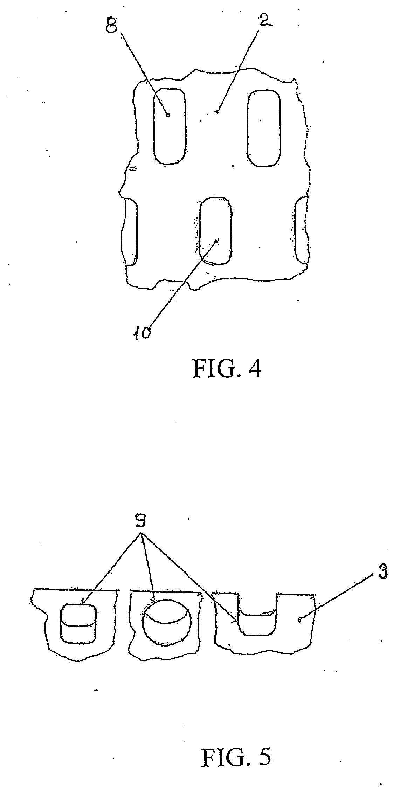

Fig. 4 shows and example of shape and distribution of the rinse windows 10 and exhaust windows 8. This shape is approximately rectangular with rounded corners.

Fig. 5 shows details of examples of embodiment of the rinse openings created in the piston 3.

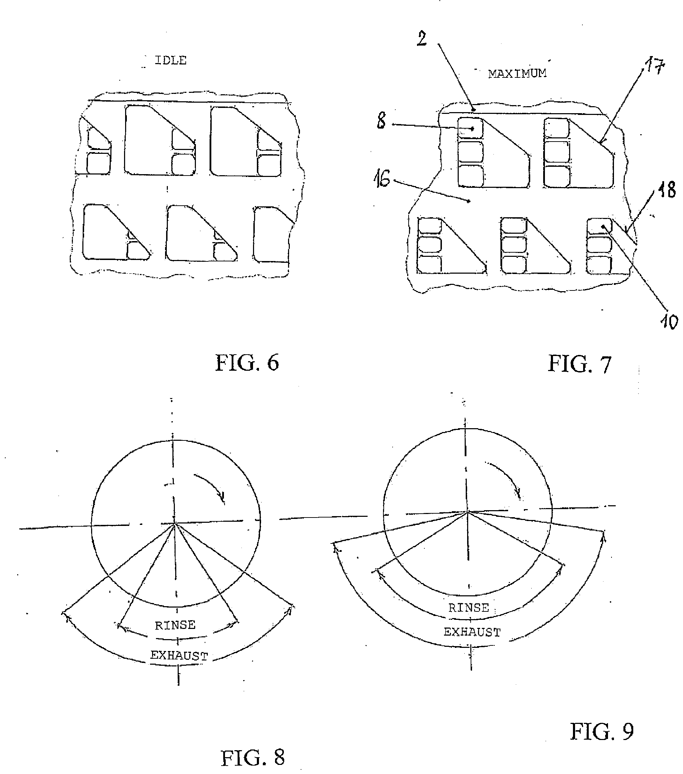

Fig. 7 shows another example of a possible shape of the rinse windows 10 and exhaust windows 8. In this example the windows are arranged in three rows over each other. The figure also shows an example of the shape of the throttling rinse openings 18, which can be described as the shape of an approximately rectangular triangle with rounded corners and an example of the shape of the throttling exhaust openings 17, which can be described as the shape of an approximately rectangular trapezium with rounded corners. The purpose of the different shapes of the throttling exhaust openings 17 and throttling rinse openings 18 will be explained below. The position of the throttling exhaust openings 17 with regard to the exhaust windows 8 and the position of the throttle rinse openings 18 with regard to the rinse windows 10 shown in fig. 7 corresponds to the full gas regime of the engine.

Fig. 6 shows the position of the throttling exhaust openings 17 with regard to the exhaust windows 8 and the position of the throttle rinse openings 18 with regard to the rinse windows 10 that corresponds to the idle regime of the engine.

Now, the function of the bushing 16 will be described. The bushing 16 has two end positions, namely the idle position and the maximum output position. The idle position is demonstrated in figures 6 and 8 and the maximum output position is demonstrated in figures 7 and 9. In the idle position the rinse windows 10 in the cylinder are partly closed by the throttling rinse openings 18, which are advantageously of an approximately triangular shape with rounded corners, providing the required quantity of air for the idle regime. As shown in fig. 6, since the shape of the throttling exhaust openings 17 approximately corresponds to the shape of a rectangular trapezium with rounded corners, the passing cross-section of the exhaust windows 8 in the idle mode is larger than the passing cross-section of the rinse windows 10, which are throttled by the throttling rinse openings 18 of an approximately triangular shape. The difference of the passing cross-sections results just from the difference of the shapes of the throttling exhaust openings 17 and the throttling rinse openings 18. In the maximum output position (see fig. 7 and 9) the rinse windows 10 are fully open. If the rinse windows 10 and exhaust windows 8 are designed e.g. as rectangular cutouts, advantageously distributed on the cylinder perimeter in a few rows over each other, the timing of the exhaust and rinse of the cylinder can be changed by turning (slewing) the bushing 16 from the idle position to the maximum output position. In the idle regime the bushing 16 is in such a position that the rectangular cutouts in the bottom row (i.e. the row towards the bottom dead centre) of the rinse windows 10 and exhaust windows 8 are only open. Therefore, during an expansion stroke the piston 3 only opens the bottom row of the rectangual cutouts in the rinse windows 10 and exhaust windows 8, which causes a delay of the exhaust and rinse of the cylinder and acceleration of cylinder rinse and exhaust because the other rows of the rectangular cutouts are covered by the bushing 16.

The invention is not only limited to the embodiment examples described above and the embodiments shown in the attached drawings, but it also comprises all adaptations and modifications that fall within the scope defined by the attached patent claims.

### Industrial applicability

The two-stroke combustion engine in accordance with the invention can be used mainly in the automotive, motorbike and aviation industries.

## Claims

1. A two-stroke combustion engine comprising a cylinder (2) fixed in a cylinder block (12) and a piston (3) mounted in the cylinder, wherein the perimeter of the cylinder (2) is provided with at least one row of exhaust windows (8) that lead to exhaust channel (7) positioned outside the cylinder (2) perimeter and, under the exhaust windows (8), with at least one row of rinse windows (10) that lead to a rinse channel (11) positioned outside the perimeter of the cylinder, wherein in each row of the exhaust windows (8) there are at least two exhaust windows (8) and in each row of the rinse windows (10) there are at least two rinse windows (10), wherein the exhaust windows (8) are angularly offset with regard to the rinse windows (10) and the piston (3) is provided with a combustion space (15) and rinse openings (9) distributed on perimeter of the piston (3) and designed as cutouts open to the compression space (6), wherein the rinse openings (9), when the piston (3) is in the bottom dead centre, interconnect the combustion space (15) with the rinse windows (10).

2. The two-stroke combustion engine according to claim 1, wherein at least two over each other positioned rows of exhaust windows (8) are created in the cylinder (2) perimeter, the exhaust windows (8) being arranged in such a way that exhaust windows (8) of different rows are positioned over each other along lines parallel to the cylinder (2) axis, the cylinder (2) perimeter further comprising at least two over each other positioned rows of rinse windows (10), the rinse windows (10) being arranged in such a way that rinse windows (10) of different rows are positioned over each other along lines parallel to the cylinder (2) axis.

3. The two-stroke combustion engine according to claim 1 or 2, wherein all the exhaust windows (8) have the same shape and size.

4. The two-stroke combustion engine according to any of the preceding claims, wherein all the rinse windows (10) have the same shape and size.

5. The two-stroke combustion engine according to any of the preceding claims, wherein all the exhaust windows (8) and rinse windows (10) have the shape of an approximate rectangle with rounded corners and the same size.

6. The two-stroke combustion engine according to any of the preceding claims, wherein the rinse windows (10) are angularly offset with regard to the exhaust windows (8) by a half of the spacing of the exhaust windows (8).

7. The two-stroke combustion engine according to any of the preceding claims, wherein it contains a bushing (16) mounted in a rotary way on the outside of cylinder (2) in the space of the exhaust channel (7) and rinse channel (11) and provided on its perimeter with at least one row of throttling exhaust openings (17) and under them with at least one row of throttling rinse openings (18), wherein the bushing can be slewed in a controlled way in the range from the first position, in which the engine is in the idle regime, to the second position, where the engine works at the maximum output.

8. The two-stroke combustion engine according to claim 7, wherein in the first position the total passing cross-section of exhaust gas outlet from the cylinder (2) through the exhaust windows and the throttling exhaust openings (17) is larger than the total passing cross-section of air inlet to the cylinder (2) through the throttling rinse openings (18) and the rinse windows (10) and in the first position both these passing cross-sections are at their minimums, wherein when slewing the bushing (16) from the first position, these passing cross-sections are increased up to their maximums in the second position.

9. The two-stroke combustion engine according to claim 7 or 8, wherein the slewing of the bushing (16) is derived from the gas pedal or the engine speed controller.

10. The two-stroke combustion engine according to any of claims 7 to 9, wherein the throttling exhaust openings (17) have approximately shape of a rectangular trapezium with rounded corners and the throttling rinse openings (18) have approximately shape of a rectangular triangle with rounded corners.

11. The two-stroke combustion engine according to any of the preceding claims, wherein the rinse openings (9) are approximately circular.

## Patentansprüche

1. Ein Zweitakt-Verbrennungsmotor mit einem Zylinder (2), der in einem Zylinderblock (12) angebracht ist sowie einem Kolben (3), der im Zylinder befestigt ist, wobei in der Wand des Zylinders (2) sich mindestens eine Reihe von Abluftfenstern (8) befindet, die zum Abluftkanal (7) führt, der sich außerhalb der Wand des Zylinders (2) befindet und, unterhalb der Abluftfenstern (8), sich mindestens einer Reihe von Spülfenstern (10) befindet, die zu einem Spülkanal (11) führt, der sich außerhalb der Wand des Zylinders befindet, wobei es in jeder Reihe der Abluftfenstern (8) mindestens zwei Abluftfenstern (8) gibt und es in jeder Reihe der Spülfenstern (10) es mindestens zwei Spülfenstern (10) gibt, wobei die Abluftfenster (8) schräg versetzt zu den Spülfenstern (10) angebracht sind und der Kolben (3) über einen Verbrennungsraum (15) und Spülöffnungen (9) an der Wand des Kolbens (3) verfügt und diese als Öffnungen in Richtung der Verdichtungskammer konzipiert sind, wobei die Spülöffnungen den Verbrennungsraum (15) mit den Spülfenstern (10) verbindet, sobald der Kolben (3) sich im unteren Totpunkt befindet.

2. Der Zweitakt-Verbrennungsmotor nach Anspruch 1 zeichnet sich dadurch aus, dass mindestens zwei übereinander positionierte Reihen der Abluftfenstern (8) in der Wand des Zylinders (2) angebracht sind, wobei die Abluftfenstern (8) in der Weise positioniert sind, dass Abluftfenstern (8) unterschiedlicher Reihen übereinander parallel zur Achse des Zylinders (2) angebracht sind, die Wand des Zylinders (2) zudem noch mindestens zwei übereinander angebrachte Reihen von Spülfenstern (10) verfügt, wobei die Spülfenster (10) so angebracht sind, dass die Spülfenster (10) unterschiedlicher Reihen parallel zur Achse des Zylinders (2) positioniert sind.

3. Der Zweitakt-Verbrennungsmotor nach Anspruch 1 bzw. 2 zeichnet sich dadurch aus, dass alle Abluftfenstern (8) die gleiche Form und Größe haben.

4. Der Zweitakt-Verbrennungsmotor nach einem der vorhergehenden Ansprüche zeichnet sich dadurch aus, dass alle Spülfenster (10) die gleiche Form und Größe haben.

5. Der Zweitakt-Verbrennungsmotor nach einem der vorhergehenden Ansprüche zeichnet sich dadurch aus, dass alle Abluftfenster (8) und Spülfenster (10) nahezu rechteckig mit abgerundeten Ecken sind und die gleiche Größe haben.

6. Der Zweitakt-Verbrennungsmotor nach einem der vorhergehenden Ansprüche zeichnet sich dadurch aus, dass die Spülfenster (10) zu den Ablassfenstern (8) um den halben Abstand der Ablassfenster (8) schräg versetzt sind.

7. Der Zweitakt-Verbrennungsmotor nach einem der vorhergehenden Ansprüche zeichnet sich dadurch aus, dass dieser über eine Buchse (16) verfügt, die außen am Zylinder (2) im Raum des Abluftkanals (7) und des Spülkanals (11) in Drehrichtung angebracht ist und an der Wand über mindestens eine Reihe von drosselnden Abluftöffnungen (17) verfügt und unter diesen sich mindestens eine Reihe von drosselnden Spülöffnungen (18) befindet, wobei die Buchse in kontrollierter Weise aus der ersten Position, in welcher der Motor sich im Leerlauf befindet, in die zweite Position, in welcher der Motor die maximale Leistung erbringt, geschwenkt werden kann.

8. Der Zweitakt-Verbrennungsmotor nach Anspruch 7 zeichnet sich dadurch aus, dass in der ersten Position die durchströmte Querschnittsfläche der Abluft vom Zylinder (2) durch die Abluftfenster und die drosselnden Abluftöffnungen (17) größer ist als die durchströmte Querschnittsfläche des Lufteinlasses zum Zylinder (2) durch die drosselnden Spülöffnungen (18) und die Spülfenster (10) und in der ersten Position beide dieser durchströmte Querschnittsflächen am kleinsten sind, wird jedoch die Buchse (16) aus der ersten Position geschwenkt, erhöhen sich diese durchströmte Querschnittsfläche bis auf ihr Maximum in der zweiten Position.

9. Der Zweitakt-Verbrennungsmotor nach Anspruch 7 bzw. 8 zeichnet sich dadurch aus, dass das Schwenken der Buchse (16) über das Gaspedal oder den Drehzahlregler erfolgt.

10. Der Zweitakt-Verbrennungsmotor nach Anspruch 7 bis 8 zeichnet sich dadurch aus, dass die drosselnden Abluftöffnungen (17) eine annähernd rechteckige Trapezform mit abgerundeten Ecken haben und die drosselnden Spülöffnungen (18) annähernd die Form eines rechtwinkligen Dreiecks mit abgerundeten Ecken haben.

11. Der Zweitakt-Verbrennungsmotor nach einem der vorhergehenden Ansprüche zeichnet sich dadurch aus, dass die Spülöffnungen (9) annähernd rund sind.

## Revendications

1. Moteur à combustion à deux temps comprenant un cylindre (2) fixé dans un bloc-cylindre (12) et un piston (3) monté dans le cylindre, dans lequel le périmètre du cylindre (2) est pourvu au minimum d'une rangée de fenêtres d'échappement (8) menant au canal d'échappement (7) situé à l'extérieur du périmètre du cylindre (2) et, sous les fenêtres d'échappement (8), d'une rangée de fenêtres de rinçage (10) menant à un canal de rinçage (11) positionné à l'extérieur du périmètre du cylindre, chaque rangée de fenêtres d'échappement (8) comportant au minimum deux fenêtres d'échappement (8) et chaque rangée de fenêtres de rinçage (10) comportant au minimum deux fenêtres de rinçage (10), les fenêtres d'échappement (8) étant décalées au niveau angulaire par rapport aux fenêtres de rinçage (10) ; le piston (3) est pourvu d'une chambre de combustion (15) et d'orifices de rinçage (9) répartis sur le pourtour du piston (3), conçus sous la forme de découpes ouvertes vers la zone de compression (6), les orifices de rinçage (9) reliant la chambre de combustion (15) aux fenêtres de rinçage (10) lorsque le piston (3) est point mort inférieur.

2. Moteur à combustion à deux temps conformément à la revendication 1, dans lequel au moins deux rangées superposées de fenêtres d'échappement (8) sont créées dans le périmètre du cylindre (2), les fenêtres d'échappement (8) étant agencées de sorte à ce que les fenêtres d'échappement (8) des rangées différentes soient superposées le long de lignes parallèles à l'axe du cylindre (2), le périmètre du cylindre (2) comprenant de plus au minimum deux rangées superposées de fenêtres de rinçage (10), les fenêtres de rinçage (10) étant agencées de sorte à ce que les fenêtres de rinçage (10) des rangées différentes soient superposées le long de lignes parallèles à l'axe du cylindre (2).

3. Moteur à combustion à deux temps conformément à la revendication 1 ou 2, dans lequel toutes les fenêtres d'échappement (8) ont la même forme et la même taille.

4. Moteur à combustion à deux temps conformément à une quelconque revendication précédente, dans lequel toutes les fenêtres de rinçage (10) ont la même forme et la même taille.

5. Moteur à combustion à deux temps conformément à une quelconque revendication précédente, dans lequel toutes les fenêtres d'échappement (8) et les fenêtres de rinçage (10) ont approximativement la forme d'un rectangle avec des angles arrondis et la même taille.

6. Moteur à combustion à deux temps conformément à une quelconque revendication précédente, dans lequel les fenêtres de rinçage (10) sont décalées au niveau angulaire par rapport aux fenêtres d'échappement (8) d'une distance égale à la moitié de l'écart des fenêtres d'échappement (8).

7. Moteur à combustion à deux temps conformément à une quelconque revendication précédente, contenant une bague (16) à montage rotatif à l'extérieur du cylindre (2) dans l'espace du canal d'échappement (7) et du canal de rinçage (11), pourvu sur son périmètre d'au minimum une rangée d'orifices d'échappement d'étranglement (17) et, au-dessous, d'au minimum une rangée d'orifices de rinçage d'étranglement (18), la bague pouvant être pivotée sur commande dans l'envergure allant de la première position, dans laquelle le moteur est au ralenti, jusqu'à la deuxième position, où le moteur fonctionne à pleine puissance.

8. Moteur à combustion à deux temps conformément à la revendication 7, dans lequel, en première position, la section transversale totale de passage des gaz d'échappement du cylindre (2) à travers les fenêtres d'échappement et les orifices d'échappement d'étranglement (17) est supérieure à la section transversale totale de passage de l'air d'admission dans le cylindre (2) à travers les orifices de rinçage d'étranglement (18) et les fenêtres de rinçage (10), ces deux sections transversales de passage étant à leur minimum dans la première position, et ces sections transversales de passage étant élargies au maximum lors du pivotement de la bague (16) de la première position à la deuxième position.

9. Moteur à combustion à deux temps conformément à la revendication 7 ou 8, dans lequel le pivotement de la bague (16) est issu de la pédale de l'accélérateur ou du régulateur de vitesse du moteur.

10. Moteur à combustion à deux temps conformément à une des quelconques revendications 7 à 9, dans lequel les orifices d'échappement d'étranglement (17) ont approximativement la forme d'un trapèze rectangulaire avec des angles arrondis et les orifices de rinçage d'étranglement (18) ont approximativement la forme d'un triangle rectangle avec des angles arrondis.

11. Moteur à combustion à deux temps conformément à une quelconque revendication précédente, dans lequel les orifices de rinçage (9) sont approximativement circulaires.
